# DEMANDE DE BREVET EUROPEEN

(11) **EP 2 070 437 A1**
(43) Date de publication de la demande: **17.06.2009**
(21) Numéro de dépôt: 08291123.1
(22) Date de dépôt: 28.11.2008
(51) Int. Cl.: A45D 42/06, B62J 29/00, B62J 3/00

(54) **Retroviseur portatif**

(30) Priorité: 10.12.2007 FR 0708568; 18.06.2008 FR 0803399; 25.07.2008 FR 0804247
(71) Demandeur: Kalogeropoulos, Leonidas, 75006 Paris (FR)
(72) Inventeur: Kalogeropoulos, Leonidas, 75006 Paris (FR)
(74) Mandataire: Eidelsberg, Olivier Nathan

(57) **Abrégé**

Dispositif formant rétroviseur d'un véhicule comportant un miroir (4) et des moyens (1, 11, 12, 13, 14) de fixation amovible destinés à fixer de manière amovible le miroir au bras ou à la main de l'utilisateur du véhicule, **caractérisé en ce que** des moyens formant avertisseur sonore, par exemple électronique, sont montés solidaire du miroir ou des moyens de fixation amovibles.

## Description

La présente invention se rapporte à un dispositif formant rétroviseur dans le domaine des véhicules dans lesquels le pilotage du véhicule nécessite de tenir avec une ou les mains un guidon, par exemple un vélo, un cyclomoteur, un scooter, un scooter à trois roues, un quad, une moto, un side-car, etc.

Par exemple dans le cas d'un vélo, il est prévu aujourd'hui de disposer un ou deux rétroviseurs à gauche et/ou à droite sur le guidon, sensiblement au niveau des poignées destinées à être empoignées par l'utilisateur. Ces rétroviseurs sont le plus souvent montés de manière amovible par un système à vis et écrou. Il est fréquent que ces rétroviseurs soient dérobés par des personnes qui l'utilisent ensuite pour leur propre vélo ou scooter de même marque, notamment parce qu'elles ont cassé le leur, ou qu'elles-mêmes se le sont fait dérober. Quand ils ne sont pas amovibles, ces rétroviseurs sont souvent difficiles à régler parfaitement aux dimensions de la personne qui utilise le vélo et, d'autre part, ils peuvent se casser assez facilement, notamment lors d'une chute du vélo ou lorsque l'on pose le vélo contre un mur. Il devient alors difficile de changer ce rétroviseur qui est monté fixe.

On a déjà décrit, dans l'art antérieur, le fait de réaliser un rétroviseur fixé de manière amovible par des moyens de fixation amovible à une partie du corps de l'utilisateur, et notamment à la main ou au bras de l'utilisateur. De tels rétroviseurs sont décrits, par exemple, dans la demande internationale WO 86/01697, dans la demande de brevet français n° 2 642 181, dans la demande de brevet japonais n° 2006-248379 et dans le modèle d'utilité allemand DE 203 13 882. Tous ces dispositifs de l'art antérieur permettent certes de résoudre en partie les problèmes mentionnés ci-dessus. Cependant, ils présentent plusieurs inconvénients. En particulier, ces rétroviseurs ne garantissent pas une grande sécurité d'utilisation lors de la conduite d'un véhicule. La présente invention vise à résoudre les inconvénients ci-dessus en proposant un rétroviseur amovible destiné à être fixé sur le bras ou la main de l'utilisateur du véhicule présentant une grande sécurité d'utilisation lors de la conduite du véhicule.

Suivant un premier aspect de l'invention, le dispositif formant rétroviseur d'un véhicule est tel que défini à la revendication 7.

En prévoyant de pouvoir faire coulisser vers l'extérieur le miroir par rapport à la main ou au bras de l'utilisateur, on donne à celui ci la faculté de positionner ses mains sur un guidon de conception quelconque dans la position qu'il souhaite, sans que pour autant son axe de vision derrière lui soit diminué. En particulier, il peut facilement régler le coulissement pour faire en sorte de ne pas se voir soi-même mais bien derrière lui. Quelle que soit la corpulence de l'utilisateur et quel que soit le positionnement relatif du guidon par rapport à l'axe du vélo, il est toujours possible de régler au départ le rétroviseur, sans avoir, ensuite chaque fois que l'on veut regarder dans celui-ci, à déplacer le bras ou la tête pour les positionner l'un par rapport à l'autre de telle sorte que l'on puisse voir derrière soi. On obtient ainsi un rétroviseur dont l'utilisation pendant la conduite est rendue beaucoup plus sûre, l'utilisateur n'ayant plus qu'à se concentrer sur la conduite de son véhicule et non plus sur le positionnement relatif de son rétroviseur par rapport à ses yeux. En outre, lorsque le boîtier est monté pivotant, il peut pivoter en cas de choc sans se casser et surtout sans que la main ne subisse le choc. En outre, par les moyens d'amortissement on s'assure que le rétroviseur ne vibre pas pendant le roulement, par exemple lorsque le cycliste passe sur des pavés.

De préférence, une plaque en un matériau plus rigide que le matériau du bracelet, notamment métallique, par exemple en acier, est montée sur le bracelet, notamment fixé sur le dit tronçon de support du miroir.

Suivant un mode de réalisation préféré de l'invention, le dispositif comporte un boîtier dans lequel est logé le rétroviseur, le boîtier ayant une ouverture dans laquelle est reçu le miroir, et une face inférieure du boîtier étant destinée à venir en contact avec la plaque fixée au bracelet avec possibilité de coulissement ou glissement relatif.

De préférence, la fixation de la face inférieure à la plaque avec possibilité de coulissement est réalisée par aimantation de la plaque et d'au moins une partie du boîtier, notamment le matériau de la face inférieure est un matériau pouvant être aimanté, notamment en acier.

Suivant un mode de réalisation préféré de l'invention, il est formé une fente dans la face inférieure du boîtier et un tenon est issu du bracelet, notamment de la plaque, et est reçu en guidage dans la fente, ce qui permet au boîtier de coulisser par rapport au bracelet en étant guidé dans la direction de la fente, tout en étant maintenu à celui-ci par aimantation à tout moment.

Suivant un mode de réalisation préféré de l'invention, des moyens formant avertisseur sonore, par exemple électronique, sont montés solidaire du miroir ou du bracelet.

Suivant un mode de réalisation préféré de l'invention, un clignotant est monté à l'extrémité extérieure du boîtier formant rétroviseur et l'actionnement du clignotant s'effectue par l'intermédiaire de moyens d'actionnement,notamment un bouton poussoir faisant saillie du bracelet sensiblement à un endroit accessible au pouce lorsque le bracelet est porté.

Suivant un mode de réalisation préféré de l'invention, il est inclus dans le boîtier une pile d'alimentation de l'ampoule du clignotant.

Suivant un mode de réalisation préféré de l'invention, le miroir est monté dans l'ouverture du boîtier en un point pivot, de manière à pouvoir être pivoté par l'utilisateur par rapport au boîtier suivant deux axes de rotation.

De préférence, le bracelet en matière souple, notamment élastique, par exemple en caoutchouc, comporte également une languette qui s'étend à l'intérieur du bracelet, de sorte que lorsque l'utilisateur porte le dispositif, le bracelet étant pris dans la main, la languette de forme concave en ayant sa convexité tournée vers le haut vient contre la paume de la main et en épouse en partie ou complètement la forme pour améliorer l'ergonomie du dispositif.

Suivant un second aspect de l'invention, totalement indépendant du premier aspect et qui peut être mis en oeuvre sans que soient prévues les caractéristiques essentielles énoncées ci dessus pour le premier aspect, un dispositif formant rétroviseur d'un véhicule est tel que défini à la revendication 1.

On décrit maintenant, à titre d'exemple, un mode de réalisation préféré de l'invention en se reportant aux dessins dans lesquels :
la figure 1 est une vue en perspective d'un dispositif suivant le premier aspect de l'invention tel que monté sur la main d'un utilisateur;

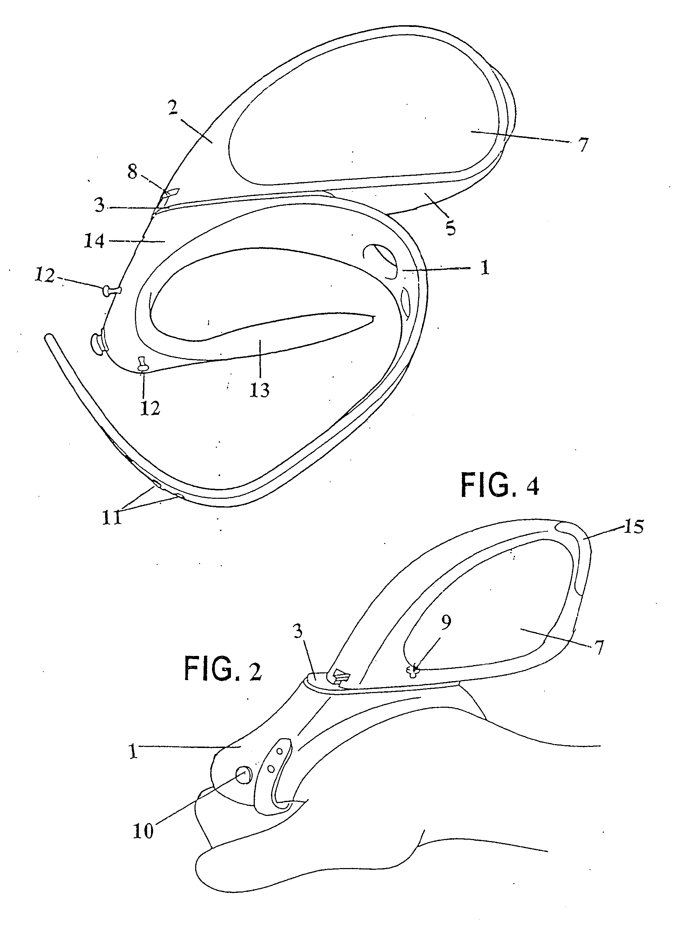

la figure 2 est une vue en perspective du bracelet du dispositif de la figure 1 dans lequel le boîtier a été coulissé vers l'extérieur (vers la droite à la figure);
la figure 3 est une vue de dessus en perspective d'un dispositif suivant l'invention identique à celui des figures 1 ou 2 à utiliser pour le côté gauche d'un utilisateur ;
la figure 4 est une vue en perspective de dessous d'un autre mode de réalisation du dispositif suivant l'invention sensiblement identique à celui des figures 1 ou 2, à l'exception des formes du boîtier, du périmètre du miroir, du clignotant, du bouton de commande du clignotant et des tenons et ouvertures pour la fermeture du bracelet, les autres caractéristiques étant identiques ;

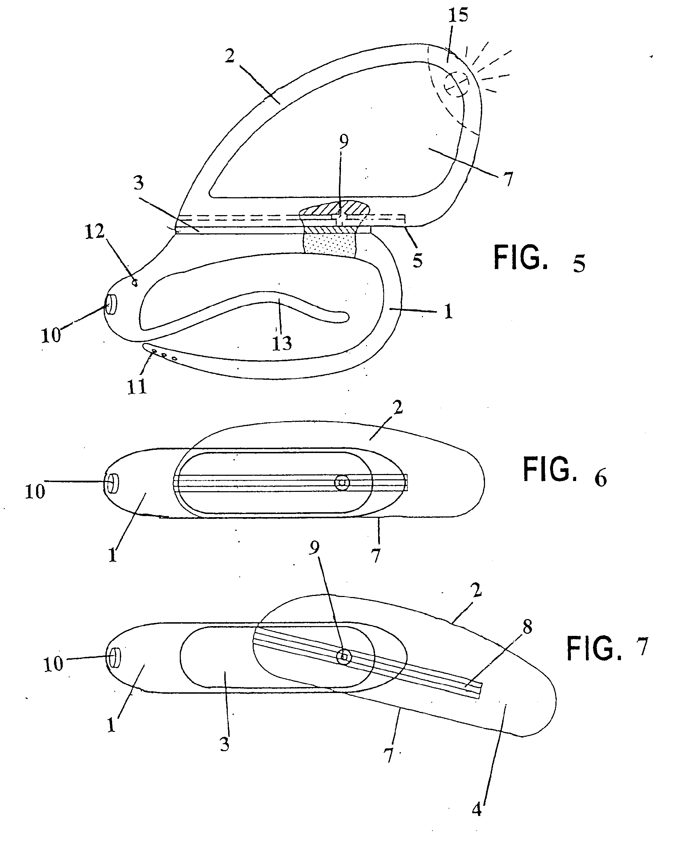

la figure 5 est une vue de côté du dispositif des figures 1 et 2, à l'état non monté ;
la figure 6 est une vue de dessus du dispositif de la figure 5, à l'état non coulissé du miroir ;
la figure 7 est une vue de dessus du dispositif des figures 5 et 6, à l'état coulissé et pivoté du boîtier et donc du miroir par rapport au bracelet ;
la figure 8 est une vue éclatée du dispositif de la figure 1 ;
la figure 9 est une vue en perspective d'un dispositif suivant le second aspect de l'invention ;
la figure 10 représente un autre mode de réalisation d'un dispositif suivant le second aspect de l'invention, dans lequel le miroir n'est pas monté coulissant par rapport au bracelet et dans lequel l'avertisseur sonore n'est pas actionné ; et
la figure 11 représente le mode de réalisation de la figure 10 dans lequel l'avertisseur sonore est actionné.

Comme on le voit aux figures, le dispositif formant rétroviseur est constitué d'un bracelet 1 en résine de polyuréthanne souple (caoutchouc), et d'un boîtier 2, notamment en un matériau métallique pouvant être aimanté, par exemple en acier. Le bracelet est destiné à être pris dans la main par l'utilisateur en faisant le tour de celle-ci en passant sur le dos de la main et la paume, sous les quatre doigts, et entre l'index et le pouce. Le bracelet est fixé à la main par l'intermédiaire de trous 11 et d'ergots 12 qui pénètrent dans les trous 11, les trous et les ergots se trouvant à des parties opposées l'une à l'autre du bracelet. On peut ainsi régler, en fonction de la taille de la main de l'utilisateur, le tour du bracelet.

Sur la partie supérieure ou de support du bracelet (on entend par supérieure ou de support la partie destinée à venir en contact avec le boîtier), il est monté, notamment par collage, une plaque 3 oblongue métallique aimantée, par exemple en acier.

Le boîtier 2 définit en son sein un espace intérieur et comporte une ouverture 4 et une face 5 de base destinée à venir en contact avec la plaque 3. Un clignotant 15 est monté à l'extérieur du boîtier.

La face 5 de base et la plaque 3 sont aimantées de manière à s'attirer mutuellement pour ainsi assurer leur fixation mutuelle par aimantation, la force de l'aimantation étant suffisante pour que le boîtier ne tombe pas de soi même, mais suffisamment faible pour qu'à la main l'utilisateur puisse faire coulisser le boîtier par rapport à la plaque.

Un miroir 7, monté à pivotement de manière à pouvoir pivoter par rapport aux axes vertical et horizontal, est reçu dans le cadre de l'ouverture 4. La face 5. de inférieure du boîtier comporte une fente 8 en queue d'aronde dans laquelle pénètre un tenon 9 issu de la plaque 3. Le boîtier 2 est monté pivotant sur le tenon 9 de sorte qu'en cas de choc le boîtier 2 peut se dérober sans se casser. Le boîtier est maintenu par sa face 5 en contact avec la plaque 3 par aimantation. Le boîtier peut ainsi coulisser vers l'extérieur par rapport à la plaque 3, en étant guidé par le déplacement du tenon dans la fente, une rotation par rapport au tenon étant également possible. En particulier, le coulissement du miroir par rapport au bracelet se fait parallèlement au plan du miroir ou au plan du cadre ou bord de l'ouverture 4 recevant le miroir. L'utilisateur peut ainsi positionner convenablement le rétroviseur et ce, quelle que soit sa morphologie, sa manière de tenir le guidon et le positionnement du guidon par rapport à l'axe du vélo. Dans l'espace intérieur du boîtier 2, il est monté une pile d'alimentation (non représentée) destinée à alimenter la lampe (non représentée) du clignotant 15. Un bouton 10 d'actionnement est logé dans un évidement ménagé dans le bracelet, à un endroit tel qu'il peut être actionné facilement par le pouce. Ce bouton est relié par un fil électrique (non représenté) traversant le bracelet, le tenon et pénétrant dans l'espace intérieur du boîtier, où il actionne par l'intermédiaire d'un circuit interrupteur, l'allumage ou la fermeture de la lampe du rétroviseur, le circuit et la lampe étant alimenté par la pile également reçue dans l'espace intérieur du boîtier.

Le bracelet comporte, dans sa partie inférieure, une languette 13 ayant une forme concave (concavité tourné vers le bas) de forme sensiblement complémentaire de la forme de la paume d'une main, et qui fait saillie à l'intérieur de l'anneau formé par le bracelet, de sorte que lorsque le bracelet est pris dans la main pour entourer les quatre doigts, la languette 13 vient en contact avec la paume de la main et en épouse la forme pour améliorer l'ergonomie du dispositif.

La section 14 du bracelet qui s'étend environ de l'extrémité extérieure de la plaque 3 jusqu'à l'extrémité intérieure de la plaque 3 (extérieur et intérieur s'entendant par rapport à l'utilisateur lorsqu'il porte le bracelet), c'est à dire sensiblement le tronçon du bracelet qui supporte le miroir, a une épaisseur (mesurée dans la direction radiale lorsque le bracelet est porté) plus grande que celle d'au moins une partie du reste du bracelet, notamment le tronçon inférieur du bracelet, diamétralement opposé au tronçon 14 de support. Ceci améliore la stabilité du miroir en utilisation, notamment lorsque l'y a des vibrations liées au roulement.

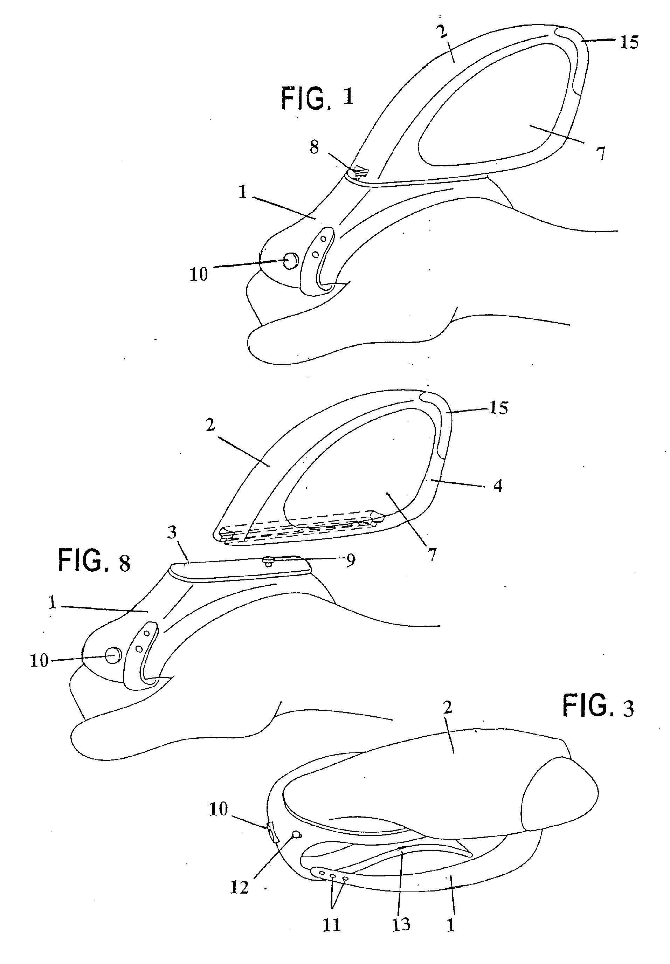

Comme représenté à la figure 3, un dispositif pour la main gauche est symétrique comme dans un miroir d'un dispositif pour la main droite (cas représenté dans les autres figures). La présente invention se rapporte également à un couple de dispositif formant miroir suivant l'invention, l'un pour la main gauche et l'autre pour la main droite.

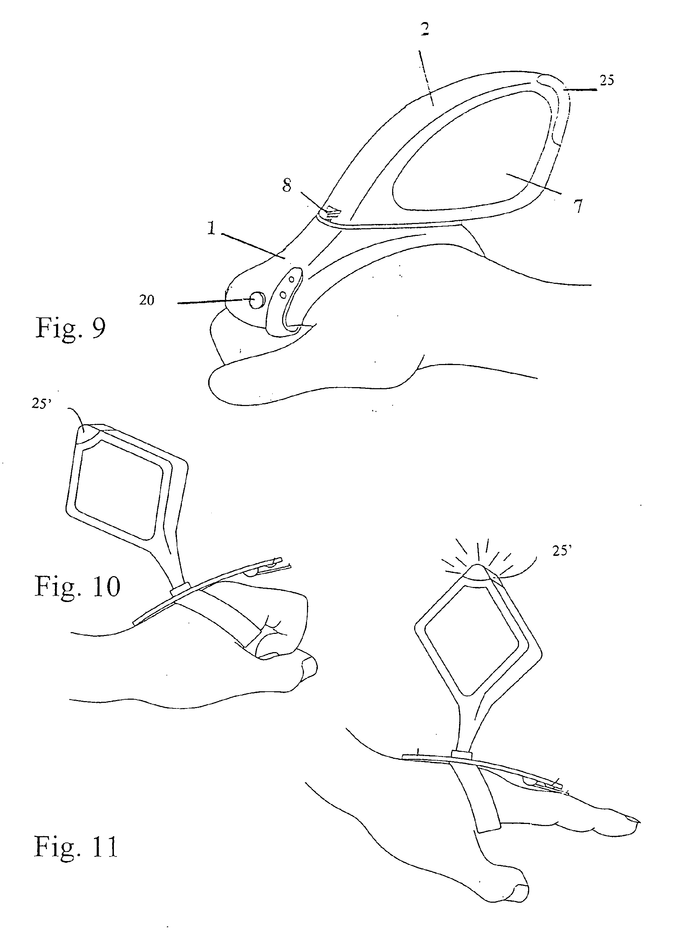

A la figure 9, il est représenté un autre aspect de l'invention, indépendant du premier aspect. La figure 9 est sensiblement identique à la figure 1, à l'exception du fait q'un avertisseur sonore 25 est monté à la place du clignotant 15. Cet avertisseur sonore peut être actionné par un bouton poussoir 20. On pourrait également prévoir à la place ou en plus, un actionnement manuel classique, soit à l'aide de l'autre main, soit avec l'un des doigts de la main portant le dispositif. Ce dernier cas est représenté aux figures 10 et 11. Il y est prévu un actionnement de l'avertisseur sonore 25' par extension d'un doigt de la main, qui agit sur une lame souple reliée à l'avertisseur sonore et qui, lorsqu'elle est déformée par l'action du doigt, actionne l'avertisseur. Suivant un autre mode de réalisation non représenté, on peut aussi faire en sorte qu'une manette d'actionnement fasse saillie suffisamment pour pouvoir être atteinte et actionnée par le pouce de la main portant le dispositif. On pourrait également disposer l'avertisseur sonore de manière à ce qu'il soit solidaire du bracelet, notamment de la plaque, plutôt que du boîtier. On pourrait en outre prévoir à la fois un clignotant et un avertisseur sonore.

On peut prévoir de combiner le premier et le deuxième aspect de l'invention, c'est à dire qu'on peut, suivant le second aspect de l'invention qui prévoit un avertisseur sonore, rendre ou non le miroir coulissant vers l'extérieur par rapport au bracelet.

En particulier, les différentes caractéristiques respectives des modes de réalisation représentés et/ou décrits ici peuvent être combinées entre elles indépendamment. Par exemple, aux modes de réalisation de la figure 10 et 11, on peut remplacer l'avertisseur sonore par un clignotant ou y adjoindre un clignotant. On peut également y prévoir un bracelet comme décrit aux autres figures à la place du bracelet simple qui y est décrit. On peut également prévoir que le miroir puisse coulisser.

## Revendications

1. Dispositif formant rétroviseur d'un véhicule comportant un miroir (4) et des moyens (1, 11, 12, 13, 14) de fixation amovible destinés à fixer de manière amovible le miroir au bras ou à la main de l'utilisateur du véhicule, **caractérisé en ce que** des moyens (25) formant avertisseur sonore, par exemple électronique, sont montés solidaire du miroir ou des moyens de fixation amovibles.

2. Dispositif suivant la revendication 1, **caractérisé en ce que** les moyens avertisseur sonore sont actionnés par un bouton (20) poussoir.

3. Dispositif suivant la revendication 1 ou 2, **caractérisé en ce que** le montage est tel que le miroir est fixé auxdits moyens de fixation amovible de manière à pouvoir coulisser dans une direction transversale à l'axe du bras de l'utilisateur, notamment perpendiculairement à l'axe du bras de l'utilisateur, lorsque le dispositif est fixé à l'utilisateur.

4. Dispositif suivant l'une des revendications 1 à 3, **caractérisé en ce que** des moyens d'amortissement sont prévus pour amortir les vibrations du miroir en utilisation.

5. Dispositif suivant la revendication 4, **caractérisé en ce que** les moyens de fixation amovible sont constitués d'un bracelet (1), notamment destiné à entourer la main en passant sur le dos et la paume de la main sous les quatre doigts et dans l'interstice entre l'index et le pouce, et le montage étant tel que le miroir est fixé au bracelet de manière à pouvoir coulisser dans une direction transversale à l'axe du bras de l'utilisateur, notamment perpendiculairement à l'axe du bras de l'utilisateur, lorsque le dispositif est fixé à l'utilisateur, et les moyens pour lutter contre les vibrations sont constitués par le fait que au moins une partie du tronçon (14) de support du bracelet qui est au niveau du miroir et qui supporte ce dernier, c'est à dire le tronçon du bracelet qui se trouve, dans la direction radiale, entre l'intérieur du bracelet et le miroir, a une épaisseur, mesurée dans la direction radiale, qui est plus grande que l'épaisseur d'au moins une partie du reste du bracelet, notamment du reste du bracelet, le bracelet étant en un matériau souple, de préférence élastique, notamment en caoutchouc.

6. Dispositif suivant la revendication 5, **caractérisé en ce qu'**une plaque (3) en un matériau plus rigide que le matériau du bracelet (1), notamment métallique, par exemple en acier, est montée sur le bracelet, notamment fixé sur ledit tronçon de support du bracelet (1), entre le bracelet (1) et le miroir.

7. Dispositif formant rétroviseur d'un véhicule comportant un miroir (4) et un bracelet (1, 11, 12, 13, 14) de fixation amovible destiné à fixer de manière amovible le miroir au bras ou à la main de l'utilisateur du véhicule, le montage étant tel que le miroir est fixé au bracelet de manière à pouvoir coulisser dans une direction transversale à l'axe du bras de l'utilisateur, notamment perpendiculairement à l'axe du bras de l'utilisateur, lorsque le dispositif est fixé à l'utilisateur, **caractérisé en ce qu'**il est prévu des moyens pour lutter contre les vibrations constitués par le fait que au moins une partie du tronçon (14) de support du bracelet qui est au niveau du miroir et qui supporte ce dernier, c'est à dire le tronçon du bracelet qui se trouve, dans la direction radiale, entre l'intérieur du bracelet et le miroir, a une épaisseur, mesurée dans la direction radiale, qui est plus grande que l'épaisseur d'au moins une partie du reste du bracelet, notamment du reste du bracelet, le bracelet étant en un matériau souple.

8. Dispositif suivant la revendication 7, **caractérisé en ce que** le matériau souple est élastique, notamment en caoutchouc.

9. Dispositif suivant la revendication 7 ou 8, **caractérisé en ce qu'**une plaque (3) en un matériau plus rigide que le matériau du bracelet (1), notamment métallique, par exemple en acier, est montée sur le bracelet, notamment fixé sur ledit tronçon de support du bracelet (1), entre le bracelet (1) et le miroir.

10. Dispositif suivant la revendication 6 ou la revendication 9, **caractérisé en ce que** le dispositif comporte un boîtier (2) dans lequel est logé le miroir, le boîtier ayant une ouverture (4) dans laquelle est reçu le miroir, et une face (5)inférieure du boîtier étant destinée à venir en contact avec la plaque fixée au bracelet avec possibilité de coulissement ou glissement relatif.

11. Dispositif suivant la revendication 10, **caractérisé en ce que** la fixation de la face inférieure du boîtier à la plaque avec possibilité de coulissement est réalisée par aimantation de la plaque et d'au moins une partie du boîtier, notamment le matériau de la face inférieure est un matériau aimanté, notamment en acier.

12. Dispositif suivant la revendication 10 ou 11, **caractérisé en ce qu'** il est formé une fente (8) dans la face inférieure du boîtier et un tenon (9) est issu du bracelet, notamment de la plaque, et est reçu en guidage dans la fente, ce qui permet au boîtier de coulisser par rapport au bracelet en étant guidé dans la direction de la fente, tout en étant maintenu à celui-ci par aimantation à tout moment, le boîtier étant, de préférence, monté également pivotant sur le tenon (9).

13. Dispositif suivant l'une des revendications 10 à 12, **caractérisé en ce qu** le miroir est monté à pivotement dans l'ouverture du boîtier en un point pivot, de manière à pouvoir être pivoté par l'utilisateur par rapport au boîtier suivant deux axes de rotation.

14. Dispositif suivant l'une des revendications 7 à 13, **caractérisé en ce que** le bracelet en matière souple, notamment élastique, par exemple en caoutchouc, comporte également une languette qui s'étend à l'intérieur du bracelet, de sorte que lorsque l'utilisateur porte le dispositif, le bracelet étant pris dans la main, la languette (13) de forme concave en ayant sa convexité tournée vers le haut vient contre la paume de la main et en épouse en partie ou complètement la forme pour améliorer l'ergonomie du dispositif.

15. Couple de dispositif comportant deux dispositifs suivant l'une des revendications précédentes qui sont symétriques l'un de l'autre comme dans un miroir.
